(19) Europäisches Patentamt
European Patent Office
Office européen des brevets

(11) Veröffentlichungsnummer: **0 308 745 B1**

(12) **EUROPÄISCHE PATENTSCHRIFT**

(45) Veröffentlichungstag der Patentschrift: **19.11.92**

(51) Int. Cl.5: **C08G 18/63**, C08G 18/68, C08G 18/50, C08G 18/32, C08G 18/65, C08F 283/00

(21) Anmeldenummer: **88114760.7**

(22) Anmeldetag: **09.09.88**

(54) **Eingedickte Formmassen.**

(30) Priorität: **16.09.87 DE 3731067**

(43) Veröffentlichungstag der Anmeldung:
**29.03.89 Patentblatt 89/13**

(45) Bekanntmachung des Hinweises auf die Patenterteilung:
**19.11.92 Patentblatt 92/47**

(84) Benannte Vertragsstaaten:
**AT CH DE ES FR GB IT LI NL**

(56) Entgegenhaltungen:
**EP-A- 0 032 547**
**US-A- 4 584 325**

(73) Patentinhaber: **BASF Aktiengesellschaft**
**Carl-Bosch-Strasse 38**
**W-6700 Ludwigshafen(DE)**

(72) Erfinder: **Hesse, Anton, Dr.**
**Peter-Nickel-Strasse 15**
**W-6940 Weinheim(DE)**
Erfinder: **Holoch, Jan, Dr.**
**Koenigsberger Strasse 22 a**
**W-6906 Leimen(DE)**
Erfinder: **Peter, Roland, Dr.**
**Pfalzring 92**
**W-6704 Mutterstadt(DE)**

EP 0 308 745 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine eingedickte, unvernetzte, lagerstabile Formmasse, die bei Temperaturen oberhalb von 50 ° C radikalisch härtbar ist.

Eingedickte, härtbare Formmassen sind Halbzeuge, die lagerstabil und verformbar sind und die nach der Verformung zu Formteilen aushärtbar sind. Beispiele sind "sheet molding compounds" (SMC) und "bulk molding compounds" (BMC), die ungesättigte Polyester und Monomere ("UP-Harze"), sowie Verstärkungsfasern und Füllstoffe enthalten. Ihre Herstellung und Verarbeitung ist beispielsweise in der Monographie von P.F. Bruins, "Unsaturated Polyester Technology", Gordon and Breach Science Publishers 1976, Seiten 211 bis 238, beschreiben. Die herkömmliche Eindickung von SMC-Massen mit Erdalkalioxiden oder -hydroxiden basiert auf der Salzbildung mit den Polyestercarboxylgruppen. Flüssige Reaktivsysteme, die keine Säuregruppen aufweisen, lassen sich daher nicht in der SMC-Technik einsetzen. Zahlreiche UP-Harze - insbesondere die flexiblen und solche mit geringem Molekulargewicht - dicken trotz Carboxylgruppengehalt entweder gar nicht oder nur ungenügend ein. Mit Hilfe dieses Eindickverfahrens läßt sich deshalb nur ein geringer Teil flüssiger Reaktivsysteme der SMC-Technik zugänglich machen. Nachteilig ist auch, daß infolge der Salzbildung im ausgehärteten Formstoff vorliegende Carboxylat- und Metallionen zu einer erhöhten Wasseraufnahme beitragen.

In der Fach- und Patentliteratur wird die Eindickung von UP-Harzen mit Polyisocyanaten beschrieben (z.B. GB 1 141 382, GB 1 272 984, US 3 824 201 und EP 16 248). Praktisch hat sich dieses Verfahren jedoch nicht durchgesetzt, da es offensichtlich nicht gelingt, klebfreie Produkte mit ausreichender Lagerstabilität auf diese Weise herzustellen. Die Gelierung tritt bereits nach kurzer Zeit auf, so daß die Halbzeuge nicht mehr einwandfrei verarbeitet werden können.

Der Erfindung lag also die Aufgabe zugrunde, ein Eindickmittel zu entwickeln, das ganz allgemein bei radikalisch polymerisierbaren, flüssigen Reaktivsystemen wirksam ist, also nicht nur bei solchen, die Carboxylgruppen enthalten, und it dem klebfreie, unvernetzte und lagerstabile Formmassen herstellbar sind, mit denen eine einwandfreie Tränkung von Verstärkungsfasern möglich ist und welche wiederum nicht die Nachteile der Erdalkalimetall-Ionen enthaltenden herkömmlichen SMC-Massen aufweisen.

Diese Aufgabe wird erfindungsgemäß dadurch gelöst, daß als Eindickmittel die Kombination eines Isocyanats mit einem Aminobenzoesäurederivat verwendet wird. Bei diesem System findet bevorzugt eine Umsetzung der Isocyanatgruppen mit den Amin-Gruppen unter Ausbildung von Harnstoffstrukturen statt. Es wird angenommen, daß die dabei gebildete mikrokristalline Phase sich in der Kälte langsam ausscheidet und ein thermoreversibles, physikalisches Netzwerk bildet, welches zu dem erwünschten Viskositätsanstieg im System führt. Geschwindigkeit und Ausmaß des Viskositätsanstiegs sind durch die Konzentration des Amins im System und durch das Verhältnis Isocyanat- zu Amin-Gruppen gezielt einstellbar. Enthält das System weitere mit Isocyanat reaktive Gruppen, z.B. Hydroxyl- und Carboxylgruppen, so können diese mit überschüssigem Isocyanat reagieren. Diese Reaktion verläuft bei Raumtemperatur langsamer als die Harnstoffbildung, so daß es Stunden, in manchen Fällen Tage dauern kann, bis die Eindickung vollständig ist. Durch diese Sekundärreaktion werden hydroxyl- bzw. carboxylgruppenhaltige Oligomere oder Polymere, die in dem flüssigen Reaktivsystem enthalten sind, mit dem Polyharnstoff verbunden. Ein zu großer Überschuß an Isocyanatgruppen ist zu vermeiden, weil sonst eine Vernetzung der Oligomeren bzw. Polymeren über Urethanbrücken erfolgt und die Formmasse unlöslich wird.

Die Harnstoffbildung aus Polyisocyanaten und aromatischen Aminen ist an sich bekannt. Sie wird ausgenützt bei der Herstellung von Polyurethan-Elastomeren.So ist z.B. in US 2 760 953 ein formbares, lagerstabiles Umsetzungsprodukt aus einem Polyester, einem Diisocyanat und einem Diamin beschrieben, welches durch Zusatz von weiterem Diisocyanat zu einem Elastomeren vernetzt werden kann.

Eine Vernetzung durch überschüssiges Isocyanat findet auch bei dem in DE-B 1 000 998 (US-A 3 047 530) beschriebenen Verfahren zur Herstellung hochvernetzter Kunststoffe statt. Hierbei werden Umsetzungsprodukte von ungesättigten Polyesterpolyolen mit Diisocyanaten in Vinlymonomeren gelöst, und es werden Diamine und Peroxidinitiatoren zugesetzt. Bei Temperaturerhöhung erfolgt gleichzeitig Vernetzung über Urethanbrückenbildung und durch radikalische Polymerisation. Die intermediäre Bildung einer eingedickten Formmasse ist nicht beschrieben.

Auch bei dem Verfahren zur Herstellung von Kunststoffen nach DE-B-1 156 976 (GB-A 1 015 340) wird mit einem starken Überschuß an Isocyanaten gearbeitet. Das Umsetzungsprodukt eines gegebenenfalls ungesättigten Polyesterpolyols mit überschüssigem Diisocyanat wird mit einem Vernetzungsmittel, welches u.a. auch ein Diamin sein kann, sowie gegebenenfalls einem Vinlymonomeren und einem Radikalbildner vermischt. Beim Aushärten erfolgt eine Vernetzung, wobei die überschüssigen Isocyanat-Gruppen zu einem Isocyanurat-Ring trimerisieren. Im Fall der Anwesenheit von Monomeren und Radikalbildnern kann parallel dazu eine radikalische Polymerisation ablaufen. Das Eindicken von flüssigen Reaktivsystemen zu Halbzeugen zum Zweck der besseren Verarbeitbarkeit durch Verformen ist in der DE-B 1 156 976 gar nicht angesprochen. Die in den Beispielen beschriebenen Reaktivsysteme sind durchweg fest, so daß sich eine Eindickung erübrigt.

In DE-A 27 15 294 (US 4,073,828) und EP-A 28 470 (US 4,296,020) ist die Eindickung von ungesättigten Polyesterharzen durch eine Kombination eines Isocyanats mit einem vorzugsweise aliphatischen Polyamin beschrieben. Es hat sich gezeigt, daß mit den dort genannten Polyaminen entweder keine ausreichende Viskositätserhöhung, d.h. keine klebfreien Produkte erhalten werden, oder daß die Eindickung schon bei Raumtemperatur viel zu schnell abläuft, so daß eine Tränkung von Verstärkungsfasern nicht mehr möglich ist.

In US 4 584 325 schließlich ist ein Zweikomponentensystem beschrieben. Flüssige Mischungen von ungesättigten Polyestern, Monomeren, einem aromatischen Diamin und einem Cobalt-Beschleuniger einerseits und von einem Isocyanat mit einem Peroxidinitiator andererseits werden zusammengegeben. Das kalthärtende, kobaltbeschleunigte System härtet dann sofort aus, ohne daß ein eingedicktes, lagerstabiles Halbzeug entsteht.

Gegenstand der Erfindung ist eine eingedickte, unvernetzte Formmasse, die bei 23 °C lagerstabil ist und bei Temperaturen oberhalb von 50 °C härtbar ist, enthaltend

A ein radikalisch polymerisierbares Monomer A 1
oder eine Mischung aus
mindestens 5 Gew.-% eines radikalisch polymerisierbaren Monomer A 1 und
höchstens 95 Gew.-% eines gesättigten oder ungesättigten, in A 1 gelösten oder dispergierten Oligomeren oder Polymeren A 2,

B 1 bis 80 Gew.-%, bezogen auf A, eines Isocyanatgruppen enthaltenden Eindickmittels,

C 0,01 bis 5 Gew.-%, bezogen auf A, eines bei Temperaturen oberhalb von 50 °C in Radikale zerfallenden Polymerisationsinitiators, sowie gegebenenfalls

D übliche Zusatzstoffe,

wobei das Eindickmittel eine Kombination ist von

B1 0,001 bis 0,5 Amin-Äquivalenten, bezogen auf 100 g A + B1, eines Aminobenzoesäure-Derivats der allgemeinen Formel (I)

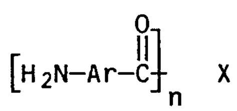

(I),

wobei die Symbole folgende Bedeutung haben:

Ar ist ein zweiwertiger aromatischer Rest, der gegebenenfalls substituiert sein kann;
n bedeutet 1 oder 2;
X kann -O-$R^1$, -NH-$R^1$, -N($R^1$)$_2$,
-O-R-O-, -NH-R-NH-, -NH-R-O-,

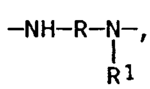 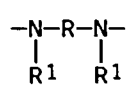 oder 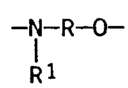

sein

R ist eine Alkylen-, Arylen-, Polyether-, Polyester-, Polyamid-oder Polycarbonat-Gruppierung;
$R^1$ ist ein Alkyl- oder Arylrest, und

B2 0,001 bis 1,5 Isocyanat-Äquivalenten, bezogen auf ein Äquivalent aller in der Formmasse enthaltenen NCO-reaktiven Gruppen, eines Isocyanats.

Zu den einzelnen Komponenten der Formmasse ist folgendes zu sagen:

A. Komponente A ist ein radikalisch polymerisierbares, flüssiges Reaktivsystem. Flüssig bedeutet dabei, daß das System fließfähig ist. Dies ist auch der Fall bei einer Emulsion oder Dispersion eines pulverförmigen Feststoffs in einer Flüssigkeit, im vorliegenden Fall z.B. eines Thermoplastpulvers in einem Monomeren. Die Viskosität dieses flüssigen Reaktivsystems bei 23 °C soll vorzugsweise unter 100.000 mPa.s liegen, insbesondere zwischen 200 und 5.000 mPa.s, gemessen nach DIN 53 015 oder mit einem Rotationsviskosimeter.

In einer besonderen Ausführungsform besteht die Komponente A ausschließlich aus radikalisch polymerisierbaren Monomeren A1.

Als Monomere mit radikalisch polymerisierbaren ungesättigten CC-Bindungen kommen in Frage:
Vinylbenzole, z.B. Styrol, α-Methylstyrol, Vinyltoluol, Ethylvinylbenzol, 2-Chlorstyrol, 2,5-Dichlorstyrol, 4-tert.-Butylstyrol, Divinylbenzol,
2-Vinylpyridin, Vinylcarbazol, Vinylimidazol,
Vinylamide, z.B. N-Vinylpyrrolidon, N-Vinylcaprolactam,
Vinylurethane,
Allylverbindungen, z.B. Diallyl-o-phthalat, Diallylisophthalat, Diallylterephthalat, Diallylfumarat, Allylbenzoat, Triallylcyanurat, Diethylenglykol-bis-allylcarbonat, Diallylether, N-Allylamide und Allylether von Phenolen sowie Allylphenole,
Ester der Acrylsäure und Methacrylsäure mit 1 bis 30 Kohlenstoffatome enthaltenden Alkoholen, die 1- bis 6-funktionell sind und aliphatische, cycloaliphatische oder aromatische Strukturen aufweisen, wie beispielsweise die Ester mit Methanol, Ethanol, n-Butanol, tert.-Butanol, 2-Ethylhexanol, Butandiol-1.4, Butendiol, Hexandiol-1.6, Propylenglykol-1.2, Ethylenglykol, Trimethylolpropan, Glycerin, Pentaerythrit, Cyclohexanol, hydriertes Bisphenol A, ethoxyliertes bzw. propoxyliertes Bisphenol A, Tricyclodecenol,
Diethylenglykol, Triethylenglykol, Polyethylenglykol, Dipropylenglykol und Polytetrahydrofuran sowie Glycidol,
Amide der Acryl- und Methacrylsäure sowie Acrylnitril, Methacrylnitril und Cyanacrylate,
Ester und Halbester von Maleinsäure, Fumarsäure, Chlormaleinsäure, Itaconsäure, Mesaconsäure und Methylenglutarsäure mit den Alkoholen, die bei Acrylaten und Methacrylaten erwähnt sind,
Maleinhalbamide, die aus Maleinsäureanhydrid mit aliphatischen oder aromatischen Aminen (sekundär und primär) unter milden Bedingungen hergestellt werden können, außerdem die über die Stufe der Halbamide durch Zyklisierung zugänglichen aromatischen Maleinimide mit 1 bis 3 Maleinimideinheiten pro Molekül,
Vinylester, z.B. Vinylacetat, Vinylpropionat, Vinylbutyrat, Vinyl-2-ethylhexanoat, Vinylstearat und Vinylbenzoat,
Vinylether,
Vinylketone,
Monomere mit CC-Dreifachbindungen (Acetylenderivate).

Die Komponente A kann aber auch eine Mischung sein von mindestens 5 Gew.%, vorzugsweise mehr als 20 Gew.%, des Monomeren A1 mit bis zu 95 Gew.%, vorzugsweise weniger als 80 Gew.%, eines Oligomeren oder Polymeren A2.

A2 kann dabei gesättigt oder ungesättigt sein, es kann im Monomeren gelöst bzw. mit diesem homogen vermischt sein, es kann aber auch im Monomeren emulgiert oder dispergiert sein.

Ungesättigte Polymere oder Oligomere sind z.B. ungesättigte Polyester, Vinylester, Vinylesterurethane, allylierte Präpolymere, Bismaleinimidharze und Kohlenwasserstoffharze. Sie können bei der Härtung der Formmasse mit dem Monomeren A1 copolymerisieren.

Gesättigte Polymere oder Oligomere sind z.B. gesättigte Polyester, Polyesterpolyole, Polyetherpolyole, Epoxidharze, Thermoplaste oder Elastomere. Sie werden bei der Härtung der Formmasse als disperse Phase in den Formstoff eingelagert, in manchen Fällen kann sich auch ein "interpenetrating network" ausbilden, wenn das Oligomere selbst thermisch vernetzbar ist.

Ungesättigte Polyester

Als ungesättigte Polyester (UP) eignen sich die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Cyclohexandiol-1,2, 2,2-Bis-(p-hydroxycyclohexyl)-propan, Trimethylolpropanmonoallylether oder Dipropylenglykol.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, $\alpha$-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid und Fumarsäure.

Das Molverhältnis von ungesättigten zu gesättigten Dicarbonsäuren liegt vorzugsweise zwischen 1:0 und 1:2,5.

Gemische ungesättigter Polyester, darunter auch solche, die in den Vinylmonomeren nur beschränkt löslich sind und leicht kristallisieren, können ebenfalls vorteilhaft eingesetzt werden. Solche leicht kristallisierenden ungesättigten Polyester können z.B. aus Fumarsäure, Adipinsäure, Terephthalsäure, Ethylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 0,5 bis 100, vorzugsweise von 2 bis 30 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220 °C aus ihren Ausgangskomponenten nach kontinuierlichen oder diskontinuierlichen Verfahren hergestellt.

Ebenfalls geeignet sind ungesättigte Polyester, die mit Cyclopenten-oder Cyclohexengruppen modifiziert sind.

Zum Einbau der Cyclopenten- und Cyclohexen-Gruppierungen in die ungesättigten Polyester werden diese mit Dicyclopentadien bzw. dessen Derivaten oder Substitutionsprodukten modifiziert, vorzugsweise mit Dicyclopentadien, Endomethylentetrahydrophthalsäure, N-Hydroxyalkyltetrahydrophthalimid oder N-Hydroxyalkylendomethylentetrahydrophthalimid. Diese Umsetzungen sind bekannt. Wenn man von Diestern mit hoher Säurezahl oder freier Maleinsäure ausgeht und bei Temperaturen zwischen 120 und 140 °C arbeitet, erhält man im wesentlichen eine Addition des Dicyclopentadiens an endständige Carboxyl- bzw. Hydroxylgruppen. Setzt man Polyester mit niedriger Säurezahl ein und arbeitet bei höheren Temperaturen, vorzugsweise oberhalb von 170 °C, so spaltet sich das Dicyclopentadien in zwei Moleküle Cyclopentadien, welches sich an Ethylendicarbonsäureester-Strukturen des Polyesters addiert und Endomethylentetrahydrophthalsäureester-Strukturen bildet. Diese Strukturen lassen sich auch durch den Einsatz von Endomethylentetrahydrophthalsäure oder deren Anhydrid erzeugen.

Bei einer bevorzugten Ausführungsform werden die modifizierten ungesättigten Polyester einem Endgruppenverschluß mit N-Hydroxyalkyltetrahydrophthalimid bzw. N-Hydroxyalkylendomethylentetrahydrophthalimid unterworfen.

Vinylester

Unter Vinylestern versteht man gemeinhin Umsetzungsprodukte von Polyepoxiden mit ungesättigten Monocarbonsäuren, vorzugsweise Methacrylsäure. Vielfach werden diese Produkte in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe

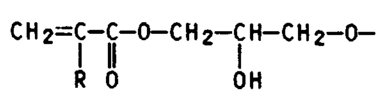

mit R = H oder $CH_3$.

Die zur Herstellung der Vinylester verwendeten Epoxidharze leiten sich von mehrwertigen Phenolen und Alkoholen ab. Die Epoxidäquivalentgewichte können zwischen 60 und 2000 liegen. Die Synthese der Epoxidharze erfolgt durch Umsetzung der mehrwertigen Phenole und Alkohole mit Epichlorhydrin und anschließender Dehydrochlorierung mit Natronlauge. Die genauen Herstellbedingungen sowie typische Vertreter aus der Klasse der Epoxidharze werden z.B. im "Handbook of Epoxy Resins" von Henry Lee und Kris Neville, Mc Graw-Hill, 1967, beschrieben.

Bevorzugte Epoxidharze sind die Glycidylether auf Basis von Bisphenol A mit Epoxidäquivalentgewichten von 140 bis 1000. Als weitere Gruppe von Polyepoxiden kommen solche auf Basis von kernhydriertem Bisphenol A und Bisphenol F, 2,2-Bis-(4-hydroxycyclohexyl)propan bzw. Bis-(4-hydroxycyclohexyl)methan, sowie epoxidierte Cycloolefine in Frage. Weiterhin stellen Polyglycidylether von Novolakharzen eine wichtige Gruppe von Epoxidharzen dar. Darunter fallen die Kondensationsprodukte von Phenol oder Kresol mit Aldehyden wie Formaldehyd oder Butyraldehyd ebenso wie Additionsprodukte von Phenol oder substituierten Phenolen mit Olefinen wie Dicyclopentadien, Isopren oder Norbornen. Weiterhin zählen zur Gruppe der bevorzugten Epoxidharze solche, die sich von Alkylenpolyphenolen ableiten, wie z.B. Bis-(4-hydroxyphenyl)methan, 1,1,2,2-Tetrakis-(4-hydroxyphenyl)ethan oder 1,1,3-Tris-(4-hydroxyphenyl)propan.

Beispielhaft für Epoxidharze auf Basis mehrwertiger aliphatischer Alkohole seien genannt die Polyglycidylether von 1,4-Butandiol, 1,6-Hexandiol, Trimethylolpropan und Poly-THF.

Unter ungesättigten Monocarbonsäuren versteht man $\alpha,\beta$-ungesättigte Carbonsäuren wie Acrylsäure oder Methacrylsäure sowie die Halbester von ungesättigten Dicarbonsäuren. Besonders bevorzugt ist Methacrylsäure. Die Umsetzung der Epoxidharze mit der ungesättigten Monocarbonsäure wird ohne Katalysatoren oder in Gegenwart von Lewisbasen wie beispielsweise tertiären Aminen, Triarylphosphinen, Acetaten oder Alkoholaten sowie Ammonium- und Phosphoniumhalogeniden bei Temperaturen von 60 bis 130 °C in Gegenwart eines inerten Lösungsmittels oder in der Schmelze durchgeführt. Dabei werden pro Epoxidgruppe von 0,6 bis 1,1 Äquivalente der ungesättigten Monocarbonsäure verwendet.

Die Erfindung eröffnet eine ganz neue, sehr einfache Möglichkeit, Vinylesterharze einzudicken. Die übliche Eindickung mit Erdalkalioxiden ist bei Vinylesterharzen nämlich nur dann möglich, wenn diese in eine Vorreaktion z.B. mit Dicarbonsäureanhydriden oder Diisocyanaten modifiziert worden waren.

Vinylesterurethane

Vinylesterurethane werden hergestellt durch Umsetzung von Polyisocyanaten mit Hydroxyalkylacrylaten oder -methacrylaten und Polyolen. Die so erhaltenen Produkte werden anschließend in einem copolymerisationsfähigen Monomeren gelöst. Charakteristisch für diese Harzklasse ist die funktionelle Einheit:

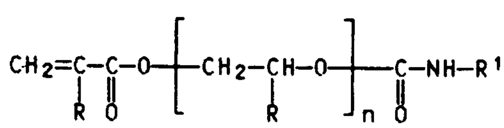 ,

wobei n = 1 bis 50 und R = H oder $CH_3$ und $R^1$ einen aliphatischen oder aromatischen Rest darstellen. Verbindungen dieser Art werden z.B. in den US-PS 3 297 745, 4 360 653 und 4 374 229 sowie in EP 2 129 beschrieben.

Eine damit verwandte Verbindungsklasse ist aus EP-A 204 497 bekannt. Sie weist die funktionelle Einheit

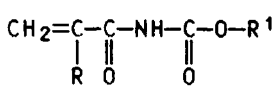

auf, wobei R und $R^1$ die vorstehende Bedeutung haben. Die Herstellung erfolgt durch Umsetzung von (Meth-)Acrylisocyanat mit Hydroxylgruppen enthaltenden Verbindungen.

Als typische Vertreter von Polyisocyanaten zur Herstellung der Vinylesterurethanharze seien genannt: Toluoldiisocyanat, Diphenylmethandiisocyanat, Isophorondiisocyanat, Hexamethylendiisocyanat sowie deren Oligomere. Beispiele für die Gruppe der Hydroxyalkyl(meth-)acrylate sind: Hydroxyethyl(meth-)acrylat, Hydroxypropyl(meth-)acrylat und Trimethylolpropandi(meth-)acrylat.

Eine Vielzahl von Polyolen, Polyetherpolyolen und Polyesterpolyolen kann mit den Isocyanaten umgesetzt werden. Hierzu zählen Polyetherpolyole auf Basis von Ethylenglykol, 1,2-Propylenglykol und 1,4-Butylenglykol, ethoxyliertes oder propoxyliertes Bisphenol A; Polyesterpolyole auf Basis von Maleinsäure, Phthalsäure oder Adipinsäure. Zur Herstellung läßt man die einzelnen Komponenten, Polyisocyanat, Polyol und Hydroxyalkyl(meth-)acrylat bei 50 bis 100 °C für 1 bis 5 Stunden reagieren. Als Reaktionsbeschleuniger finden vorwiegend tertiäre Amine und Zinn-Verbindungen Verwendung. Zum Stabilisieren der Reaktionsmischung dienen die von den ungesättigten Polyesterharzen her bekannen Verbindungen wie Chinone und Hydrochinone. Die üblichen Peroxide und Azoverbindungen wirken als Radikalstarter.

Allylierte Präpolymere

Allylierte Präpolymere lassen sich unter sorgfältig kontrollierten Bedingungen aus Diallylverbindungen herstellen. Bevorzugt sind Diallylphthalat, Diallylterephthalat, Diallylisophthalat, Diallyldiphenat, Diallylnaphthalat, Diallylcarbonat, Diallyloxalat, Diallylmalonat, Diallysuccinat, Diallyladipat, Diallylazelat, Diallylsebacat, Di-methallylphthalat, Di-methallylcarbonat. Die Präpolymeren werden bei Temperaturen von 50 bis 150 °C, bevorzugt bei 70 bis 100 °C, aus den Monomeren, gegebenenfalls in Gegenwart eines Lösungsmittels (z.B. Essigester) durch Homopolymerisation hergestellt. Die Reaktion wird durch thermisch zerfallende Radikalstarter initiiert. In Frage kommt z.B. Azo-bis-isobutyronitril. Die Vorpolymerisation wird durch Temperaturabsenkung und/oder durch Zugabe eines Inhibitors (z.B. Hydrochinon) abgebrochen. Anschließend kann die Präpolymerlösung in seinem Monomer mit weiteren copolymerisierbaren Vinylverbindungen versetzt oder es kann nach Fällung und Isolierung des Präpolymeren eine Lösung in copolymerisationsfähigen Monomeren hergestellt werden.

Bismaleinimidharze werden hergestellt aus einem Bismaleinimid (BMI) und einem Comonomer. Bismaleinimide besitzen die allgemeine Formel

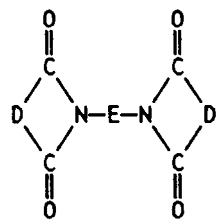

in der D eine gegebenenfalls substituierte Kohlenstoffdoppelbindung ist und E einen zweiwertigen Rest mit zumindest zwei Kohlenstoffatomen bedeutet. Bismaleinimide sind z.B. aus DE-A-20 040 094, DE-A-27 19 903 und DE-A-3 247 058 bekannt. Neben Bismaleinimiden sind grundsätzlich auch Polymaleinimide sowie Mischungen verschiedener Bismaleinimide geeignet. Bevorzugte Bismaleinimide sind 4,4′-Bismaleinimidodiphenylmethan, 4,4′-Bismaleinimidodiphenylether, 3,3′-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Es können auch bis zu 20% eines Monoimids enthalten sein.

Geeignete Comonomere sind Polyamine, Polyphenole, Alkenylphenole oder -phenolether und Aminophenole. Als Comonomere geeignete Polyamine sind z.B. aus DE-A 1 770 867 bekannt; bevorzugt sind 4,4′-Diaminodiphenylmethan, 4,4′-Diaminodiphenylsulfon und 3,3′-Diaminodiphenylsulfon. Unter den verwendbaren Polyphenolen sind Bisphenol A, Bisphenol F oder Novolake zu nennen; weitere sind in DE-A 2 459 925 aufgeführt. Geeignete Alkenylphenole oder -phenolether werden in DE-A 2 627 045 beschrieben, bevorzugt ist, o,o′-Diallylbisphenol A. Ebenfalls geeignet sind auch oligomere allyl- oder propenylterminierte Sulfone oder allyllierte Dicyclopentadien-Polyphenole. Einsetzbare Aminophenole sind z.B. m- oder p-Aminophenol.

Die BMI-Harze werden durch Anreaktion von BMI und Comonomer durch eine thermische Behandlung erhalten, wobei sich ein Präpolymer bildet. Die Löslichkeit der BMI-Harze im Monomeren A1 läßt sich durch Gegenwart von Maleinimidamid-Komponenten und Maleinsäureanhydridderivaten, wie in der EP-A 135 964 beschrieben, verbessern.

Auch durch Zusatz von Acrylsäure läßt sich die Löslichkeit von BMI-Harzen in Monomeren verbessern.

Als Comonomer für BMI können auch die Monomeren A1 selbst dienen. In diesem Fall ist keine Anreaktion des BMI mit dem Comonomer nötig.

Kohlenwasserstoffharze

Unter Kohlenwasserstoffharzen versteht man ungesättigte, höhermolekulare Kohlenwasserstoffe, die beispielsweise durch Polymerisation von Butadien, meist in Kombination mit etwa 20% Styrol, hergestellt werden. Die Produkte sind lösliche, farblose, sirupartige Flüssigkeiten mit Molekulargewichten bis zu 10.000. Diese Butadienharze sind in der Monographie "Glasfaserverstärkte Kunststoffe", P.H. Selden, Springer-Verlag, Berlin, New York; Heidelberg, 1967, Seiten 54-56, beschrieben.

Kristallisierbare, gesättigte Polyester

Die Polyester können in an sich bekannter Weise durch Kondensation in inerten Lösungsmitteln, gegebenenfalls in Gegenwart von Wasserschleppmitteln erhalten werden. Vorzugsweise werden sie jedoch durch Schmelzkondensation aus den Aufbaukomponenten bei Temperaturen von 140 bis 220 ° C, vorzugsweise von 170 bis 200 ° C hergestellt. Die Polyester erstarren beim Abkühlen der Schmelze vorzugsweise amorph glasartig, manchmal teilkristallin, opak, besitzen hierbei Erweichungspunkte nach KSN (Krämer-Sarnow-Nagel) von 30 bis 95 ° C, vorzugsweise von 55 bis 80 ° C, und lassen sich stets durch Erwärmen in organischen Lösungsmitteln, beispielsweise Ethanol oder den Polyhydroxylverbindungen, kristallisieren. Die Molekulargewichte liegen zwischen ungefähr 180 und 2.500, vorzugsweise zwischen 200 und 1.500 und insbesondere zwischen 240 und 1.000.

Als Aufbaukomponente zur Herstellung der Polyester wird insbesondere Isophthalsäure verwendet. Vorzüglich geeignet sind auch Mischungen aus Terephthalsäure und aromatischen Dicarbonsäuren, wie Isophthalsäure und ortho-Phthalsäure, und/oder gegebenenfalls gesättigten aliphatischen Dicarbonsäuren mit 2 bis 6 Kohlenstoffatomen, wie z.B. Bernsteinsäure, Adipinsäure, wobei die Mischungen vorteilhafterweise einen Terephthalsäuregehalt von 20 bis 95, vorzugsweise 40 bis 80 Mol.%, bezogen auf die Dicarbonsäuremischung, besitzen. Bewährt haben sich beispielsweise Mischungen aus Terephthalsäure und Isophthalsäure mit mindestens 20 Mol.%, vorzugsweise 40 bis 80 Mol.% Terephthalsäure, Mischungen aus Terephthalsäure und ortho-Phthalsäure mit mindestens 60 Mol.%, vorzugsweise 70 bis 90 Mol.% Terephthalsäure und Mischungen aus Terephthalsäure und aliphatischen, gegebenenfalls ethylenisch ungtesättigten Dicarbonsäuren mit 2 bis 6 Kohlenstoffatomen mit mindestens 50 Mol.%, vorzugsweise 60 bis 95 Mol.% Terephthalsäure. Verwendet werden kann auch Terephthalsäure allein, jedoch nur in Kombination mit bestimmten Alkoholmischungen. Verwendbar sind aber auch kristallisierbare Polyester, die ausschließlich auf Basis aliphatischer Dicarbonsäuren und Diolen aufgebaut sind, z.B. aus Bernsteinsäure und Butandiol-1,4.

Anstelle der genannten Dicarbonsäuren können auch Dicarbonsäurederivate, beispielsweise deren Mono- und/oder Diester mit ein- und/oder zweiwertigen Alkoholen mit 1 bis 4 Kohlenstoffatomen oder deren Anhydride verwendet werden.

Als Alkohole mit 1 bis 6 Kohlenstoffatomen werde vorzugsweise symmetrisch aufgebaute Diole mit 2 bis 6 Kohlenstoffatomen und primären OH-Gruppen verwendet. Beispielhaft genannt seien Ethylenglykol, 1,3-Propandiol, 1,4-Butandiol, 1,5-Pentandiol, 1,6-Hexandiol, Dibromneopentylglykol und insbesondere Neopentylglykol. Die Diole können einzeln oder als Mischungen eingesetzt werden, wobei Mischungen aus Neopentylglykol und Ethylenglykol bevorzugt sind.

Zur Herstellung der Polyester können neben den oben genannten symmetrisch aufgebauten Diolen zusätzlich Monoalkohole in Mengen bis zu 20 Mol.%, vorzugsweise 5 bis 15 Mol.%, wie z.B. Benzylalkohol, Hexanol-1 oder 2-Ethylhexanol-1, unsymmetrisch aufgebaute Diole in Mengen bis zu 60 Mol.%, vorzugsweise 5 bis 50 Mol.%, wie z.B. 1,2-Propylenglykol, 1,3-Butylenglykol und Dipropylenglykol und mehrwertige Alkohole in Mengen bis zu 30 Mol.%, vorzugsweise 2 bis 20 Mol.%, wie z.B. Glycerin und Trimethylolpropan mitverwendet werden, wobei die Mol.% bezogen sind auf die insgesamt eingesetzte Alkoholmenge. Während Polyester aus Isophthalsäure vorzugsweise mit symmetrisch aufgebauten Diolen kondensiert werden, muß bei ausschließlicher Verwendung von Terephthalsäure ein Teil der symmetrisch aufgebauten Diole durch unsymmetrische ersetzt werden. Bewährt haben sich beispielsweise Mischungen aus symmetrisch aufgebauten Diolen, wie z.B. Ethylenglykol, Neopentylglykol, Butandiol-1,4, Hexandiol-1,6 und unsymmetrisch aufgebauten Diolen, wie z.B. Propylenglykol-1,2, Dipropylenglykol, Butandiol-1,3.

Polyetherpolyole, Polyesterpolyole

Polyesterpolyole besitzen Funktionalitäten von 2 bis 6, vorzugsweise 2 bis 4, und Hydroxylzahlen von 20 bis 700, vorzugsweise von 280 bis 490. Sie basieren auf organischen Dicarbonsäuren und mehrwertigen Alkoholen, vorzugsweise Diolen. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terepathalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z.B. Sorbit und vorzugsweise Ethylenglykol, Diethylenglykol, 1,4-Butylenglykol und 1,6-Hexamethylenglykol. Als mehrwertige Alkohole können ferner Alkanolamine, Dialkanolamine und Trialkanolamine, z.B. Ethanolamin, Diethanolamin, Triethanolamin und Triisopropanolamin verwendet werden. Die genannten Dicarbonsäuren und mehrwertigen Alkohole können auch in form von Mischungen eingesetzt werden. Besonders bewährt haben sich und daher vorzugsweise verwendet werden Polyesterpolyole aus Adipinsäure oder Mischungen aus Bernstein-, Glutar- und Adipinsäure und Diethylenglykol und Alkoholmischungen aus Ethylenglykol/1,4-Butylenglykol, Ethylenglykol/Diethylenglykol,

Ethylenglykol/Trimethylolpropan, Diethylenglykol/Trimethylolpropan, Ethylenglykol/Pentaerythrit, Ethylenglykol/Triisopropanolamin und Diethylenglykol/Triisopropanolamin.

Die Polyesterpolyole besitzen Molekulargewichte von ungefähr 220 bis 3.000 und vorzugsweise von 300 bis 800.

Anstelle der genannten Polyesterpolyole, die einzeln oder als Gemische eingesetzt werden können, können auch homogene, bei 10 bis 30 ° C flüssige Mischungen aus den oben genannen Polyesterpolyolen und löslichen kristallinen organischen Komponenten, z.B. hydroxylgruppenhaltigen Polyestern aus aromatischen Dicarbonsäuren und vorzugsweise unsubstituierten, linearen Diolen, Anwendung finden.

Polyetherpolyole besitzen Funktionalitäten von 2 bis 8, vorzugsweise 2 bis 4, und Hydroxylzahlen von 20 bis 800, vorzugsweise von 25 bis 700, die nach bekannten Verfahren, beispielsweise durch anionische Polymerisation mit Alkalihydroxiden, wie Natrium- oder Kaliumhydroxid oder Alkalialkoholaten, wie Natriummethylat, Kalium- oder Natriummethylat oder Kaliumisopropylat als Katalysatoren oder durch kationische Polymerisation mit Lewissäuren, wie Antimonpentachlorid, Borfluorid-Etherat u.a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N′-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4′-, 2,4′- und 2,2′-Diaminodiphenylmethan. Als Polyetherpolyole, hergestellt aus Verbindungen der erwähnten Gruppe sind besonders interessant N,N,N′,N′-Tetrakis-(2-hydroxyethyl)-ethylendiamin, N,N,N′,N′-Tetrakis-(2-hydroxypropyl)-ethylendiamin, N,N,N′,N″,N″-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyldiethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylolpropan, Pentaerythrit, Sorbit und Saccharose.

Die Polyetherpolyole besitzen Molekulargewichte von 200 bis 7.000 und vorzugsweise von 500 bis 6.500. Sie können ebenso wie die Polyesterpolyole einzeln oder in form von Mischungen verwendet werden.

Es können auch Mischungen aus Polyesterpolyolen und Butandiol-1,4, Hexandiol-1,6 und unsymmetrisch aufgebauten Diolen, wie z.B. Propylenglykol-1,2, Dipropylenglykol, Butandiol-1,3, verwendet werden.

Epoxidharze

Unter Epoxidharzen im Sinne der Erfindung versteht man Mischungen aus Glycidylethern mehrwertiger Phenole oder Alkohole mit Härtern. Die Epoxidäquivalentgewichte der Epoxidharze können zwischen 60 und 10.000 liegen. Die Synthese oder Epoxidharze erfolgt durch Umsetzung der mehrwertigen Phenole und Alkohole mit Epichlorhydrin und anschließender Dehydrochlorierung mit Natronlauge. Die genauen Herstellbedingungen sowie typische Vertreter aus der Klasse der Epoxidharze werden z.B. im "Handbook of Epoxy Resins" von Henry Lee und Kris Neville, Mc Graw-Hill, 1967, beschrieben.

Lösungen von Epoxidharzen in ungesättigten Monomeren werden z.B. in US-PS 4 579 931 oder von Mleziva (Angew. Makromol. Chemie 127, S. 115, 1984) beschrieben.

Bevorzugte Epoxidharze sind solche auf Basis von Bisphenol A mit einem Epoxidäquivalentgewicht von 140 bis 1.000, aber auch daraus abgeleitete Polymere wie die Phenoxyharze der Fa. Union Carbide. Weiterhin stellen die bereits als Vorstufen für Vinylesterharze beschriebenen Epoxidharze bevorzugte Komponenten für Epoxidharzlösungen dar. Darüber hinaus umfassen Epoxidharze auf der Basis aromatischer Amine wie Diaminodiphenylmethan, Diaminodiphensulfon eine bevorzugte Klasse im Sinne der Erfindung.

Die üblicherweise bei ungesättigten Polyesterharzen verwendeten radikalisch härtbaren Monomeren werden auch bei den Epoxidharzen eingesetzt. Dazu zählen Styrol, substituierte Styrole, Ester ungesättigter Carbonsäuren wie Acryl- oder Methacrylsäure sowie Allylverbindungen wie Diallylphthalat.

Geeignete Härter sind Carbonsäureanhydride, mehrkernige Phenolverbindungen sowie Salze von

Oxonium-, Sulfonium- und Phosphoniumverbindungen.

Thermoplastische Polymere

Thermoplaste lassen sich durch radikalische, kationische oder anionische Polymerisation nach bekannten Verfahren als Homo- oder Copolymerisate gewinnen. Beispiele dafür sind Polystyrol, Polymethacrylate, Polyacrylate, Polyvinylester, Polyvinylchlorid, Polypropylen, Polyethylen und Polyvinylether. Geeignet sind auch Polykondensate wie beispielsweise Polyalkylenterephthalate, Polyamide, aromatische Polyether, Polyetherimide, Polyetherketone, Polycarbonate, Polyphenylensulfid, Polysulfone und Celluloseester. Sie sind in den Monomeren A1, löslich, dispergier- oder emulgierbar.

Elastomere

Vorteilhaft lassen sich auch Elastomere analog zu thermoplastischen Polymeren für die erfindungsgemäßen Formmassen einsetzen. Sie sind in den polymerisierbaren Monomeren entweder löslich oder feinteilig dispergierbar nach bekannten Verfahren. Eine Übersicht der in Frage kommenden Elastomeren einschließlich einer Beschreibung der Eigenschaften, der Struktur und der Herstellung gibt die Monographie: "Rubber Chemistry", J.A. Brydson, Applied Science Publishers Ltd., London, 1978. Als Beispiele seinen angeführt: Polydiene, wie Polybutadien, Polyisopren, Polychloropren sowie insbesondere Blockcopolymere aus 40 bis 95 Gew.% eines Diolefins, z.B. Butadien, Isopren oder Chloropren, und 60 bis 5 Gew.% eines Vinylaromaten, z.B. Styrol oder $\alpha$-Methylstyrol. Sie werden durch anionische Polymerisation, z.B. mit lithium- oder natriumorganischen Verbindungen, hergestellt und weisen eine blockartige Struktur auf. Die Blöcke können je nach Herstellverfahren scharbe oder verschmierte Übergänge haben. Die einzelnen Blöcke können nur aus einem einzigen Monomeren bestehen, es können aber auch zwei Monomere in einem Block in unregelmäßiger Verteilung copolymerisiert vorliegen. Das Blockcopolymere kann aus zwei, drei, vier oder noch mehr Einzelblöcken bestehen. Zur Erzielung besonderer Effekte kann das Blockcopolymere Carboxylgruppen enthalten. Das Molekulargewicht der Blockcopolymeren liegt zwischen 20.000 und 200.000, vorzugsweise zwischen 50.000 und 150.000. Darüberhinaus lassen sich Ethylen-Propylen-Diencopolymere (EPDM), Acrylkautschuk, Polyurethanelastomere und Polyisobutylen einsetzen.

Zum Aufbau der flüssigen Reaktivsysteme steht ein breites Spektrum von Einsatzstoffkombinationen zur Verfügung, angefangen von den radikalisch polymerisierbaren Monomeren, ihren Mischungen miteinander und mit Oligomeren und/oder thermoplastischen Polymeren und/oder Elastomeren. Diesen Kombinationsmöglichkeiten entspricht ein weites Feld von Formstoffeigenschaften der gehärteten erfindungsgemäßen Formmassen. Doch es ist zusätzlich noch dadurch ergänzungsfähig, daß im untergeordneten Maße Isocyanat-reaktive Polyester- bzw. Polyetherpolyole den Reaktivsystemen zugemischt werden können, um dessen Viskosität zu erniedrigen. Diese sind vorzugsweise difunktionell, um eine vorzeitige Gelierung der Formmassen bei der Eindickung auszuschließen. In Frage kommen die in der Polyurethanchemie üblichen Diole, Alkanolamine und aliphatischen Diamine sowie Polyesterdiole, Polyalkylenoxide und Polytetrahydrofurane.

B. Komponente B1 ist ein Aminobenzoesäurederivat der allgemeinen Formel:

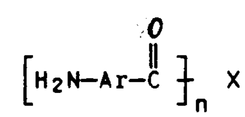

(I),

wobei die Symbole folgende Bedeutung haben:

- Ar ist ein zweiwertiger aromatischer Rest, der gegebenenfalls substituiert sein kann;
- n bedeutet 1 oder 2;
- X kann -O-$R^1$, -NH-$R^1$, -N$(R^1)_2$,

-O-R-O-, -NN-R-NH-, -NH-R-O-,

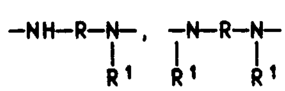

oder

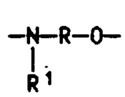

sein;

R ist eine Polyalkylen-, Polyether-, Polyester-, Polyamid- oder Polycarbonat-Gruppierung;
$R^1$ ist ein Alkyl- oder Arylrest, vorzugsweise mit bis zu 12 Kohlenstoffatomen.

Als aromatische Kerne Ar eignen sich z.B. Benzol, Naphthalin, Anthrazen, Phenanthren und Heterocyclen mit 5- und 6-gliedrigen Ringen sowie polycyclische Verbindungen mit N-, O-, S-Heteroatomen, die gegebenenfalls durch Alkyl-, Alkoxy- oder Halogengruppen substituiert sein können.

Als geeignete Amine sind beispielhaft zu nennen: Ester und Amide der o-, p- oder m-Aminobenzoesäure, wie Methyl-, Ethyl-, Benzyl- und Cyclohexylester, Anthranilsäureamide und -ester, sowie die Umsetzungsprodukte von Aminobenzoesäureestern bzw. Isatosäureanhydrid mit Polyolen, Polyetherolen, Alkanolaminen, primären und sekundären Aminen, beispielsweise 1,3-Propandioldi-p-aminobenzoat, Ethylenglykoldi-p-aminobenzoat, 1,6-Hexandioldi-p-aminobenzoat, 1,4-Butandioldi-p-aminobenzoat, 1,9-Nonandioldi-p-aminobenzoat, 1,6-Hexamethylendiaminodi-p-aminobenzamid, 1,2-Ethylendiaminodi-p-aminobenzamid und die entsprechenden o-Aminobenzoate.

Besonders bevorzugt sind Aminobenzoesäurederivate der Formel I, bei denen X = -O-R-O- oder -NH-R-NH- ist, und R eine Polyethergruppierung mit einem Polymerisationsgrad zwischen 1 und 300, insbesondere zwischen 1 und 50 oder eine Alkylengruppe mit 2 bis 20, insbesondere 2 ibs 6 Kohlenstoffatomen bedeutet.

Die Aminobenzoesäurederivate werden üblicherweise allein oder als Gemische miteinander in einem Konzentrationsbereich von 0,001 bis 0,5, vorzugsweise von 0,005 bis 0,05 Amin-Äquivalenten, bezogen auf 100 g der Gesamtmenge aus Reaktivsystem A und Komponente B1, eingesetzt, Sie sind im flüssigen Reaktivsystem A gelöst oder zumindest feinteilig dispergiert. Bei zu geringem Amin-Gehalt wird keine ausreichende Eindickung erhalten, bei zu viel Amin dickt das System zu schnell ein, so daß z.B. keine Fasertränkung mehr möglich ist.

In einer weiteren Ausführungsform lassen sich neben den aromatischen primären Aminen zusätzlich aromatische sekundäre N-alkyl- bzw. N-arylsubstituierte Amine mitverwenden. Beispiele dafür sind: N-Alkylaniline und -naphthylamine mit 1 bis 30 C-Atomen in der Alkylkette, wie beispielsweise N-Methyl-, N-Ethyl-, N-Isopropyl-, N-Cyclohexyl-, N-Benzyl, N-Lauryl- und N-Stearylaniline sowie β-Hydroxyethyl- bzw. β-Hydroxypropylanilin und Diphenylamin. Als gegebenenfalls mitzuverwendende sekundäre Amine kommen auch N-substituierte aromatische Diamine in Frage wie N,N′-Diphenylethandiamin, N,N′-Diphenylhexamethylendiamin, N,N′-Diphenyl-1,5-diamino-3-oxapentan, N,N′-Dicyclohexyl-p-phenylendiamin, N,N′-Diisopropyl-m-phenylendiamin oder N,N′-Diisopropyl-4,4′-diaminodiphenylmethan.

Diese sekundären Amine bewirken eine Verlangsamung der Eindickung, die dann erwünscht sein kann, wenn man mit der noch flüssigen Masse z.B. Verstärkungsfasern tränken will und die Masse erst auf der Faser eindicken soll.

Es hat sich gezeigt, daß aliphatische Amine, z.B. nach DE-A 27 15 294 und EP-A 28470 nicht geeignet sind, da zusammen mit Isocyanaten die Eindickung so schnell und unkontrolliert abläuft, daß eine Verarbeitung des Materials unmöglich wird. Auch treten dabei sehr leicht Vernetzungen in den eingedickten Formmassen auf.

B 2 Isocyanate

Die Isocyanate werden in einem solchen Mengenverhältnis eingesetzt, daß mindestens 0,1% aller isocyanatreaktiven Gruppen umgesetzt werden und daß der Überschuß der Isocyanatgruppen gegenüber den isocyanatreaktiven Gruppen höchstens 50% beträgt. Das Verhältnis von Isocyanatgruppen und isocyanatreaktiven Gruppen liegt also zwischen 1,5 bis 0,001 : 1, bevorzugt zwischen 1,0 bis 0,01 : 1. Isocyanatreaktive Gruppen enthalten aktiven Wasserstoff. Als wichtigste sind zu nennen: Amin-, Hydroxyl- und Carboxylgruppen. Setzt man zu wenig Isocyanat ein, dann ergibt sich keine ausreichende Eindickung, bei einem zu großen isocyanat-Überschuß erhält man vorzeitige Vernetzung durch Urethanbrückenbildung. Verhältnismäßig geringe Mengen an Isocyanat genügen dann, wenn die Komponenten A und D keine reaktiven Gruppen aufweisen, wenn das Isocyanat also nur zur Bildung der Harnstoffstruktur durch Reaktion mit dem aromatischen Amin dient. Das Äquivalent-Verhältnis Isocyanatgruppen zu Amingruppen sollte vorzugsweise zwischen 0,1 : 1 bis 1,5 : 1, insbesondere zwischen 0,5 : 1 und 1 : 1 liegen.

Als Isocyanate kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecamethylen-diisocyanat, Tetramethylendiisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4′-, 2,2′- und 2,4′- Dicyclohexylmethandiisocyanat sowie die entsprechenden Isomerengemische und vorzugsweise aromatische Di- und Polyisocyanate wie 4,4′-, 2,4′- und 2,2′-Diisocyanatodiphenylmethan und die entsprechenden Isomerengemische, 2,4- und 2,6-Diisocyanato-toluol und die entsprechenden Isomerengemische, 1,5-Diisocyanatonaphthalin, Polyphenyl-polymethylenpolyisocyanate, 2,4,6-Triisocyanato-toluol und vorzugsweise Gemische aus Diphenylmethana-diisocyanaten und Polyphenyl-polymethylenpolyisocyanaten (Roh-MDI). Die genannten Di- und Polyisocyanate können einzeln oder in Form von Mischungen eingesetzt werden.

Als weitere Beispiele seien genannt: m-Phenylendiisocyanat, 4,4′-Bisphenylendiisocyanat, 2,4′-Diisocyanatodiphenylsulfon, 3,3′-Diisocyanatodiphenylsulfon, 4,4′-Diisocyanatodiphenylsulfid, 1,5-Tetrahydronaphthylendiisocyanat.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate wie sie z.B. in den DE-PS 10 22 789, 12 22 067 und 10 27 394 sowie den DE-OS 19 29 034 und 20 04 048 beschrieben werden. Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 3 567 765 und der DE-PS 12 31 688 genannt werden.

Vorzugsweise kommen jedoch zur Anwendung: Urethangruppenhaltige Polyisocyanate, beispielsweise mit niedermolekularen Diolen, Triolen oder Polyoxypropylenglykolen modifiziertes 4,4′-Diphenylmethandiisocyanat oder Toluylen-diisocyanat, Carbodiimidgruppen und/oder Isocyanuratringe enthaltende Polyisocyanate, z.B. auf Diphenylmethandiisocyanat- und/oder Toluylendiisocyanat-Basis und insbesondere Toluylendiisocyanate, Diphenylmethan-diisocyanate, Mischungen aus Diphenylmethandiisocyanaten und Polyphenyl-polymethylen-polyisocyanaten (Roh-MDI) und Gemische aus Toluylendiisocyanaten und Roh-MDI.

Ebenfalls geeignet sind Präpolymere mit Isocyanatgruppen. Sie werden erhalten durch Reaktion eines relativ hochmolekularen Materials, das mindestens zwei isocyanatreaktive Gruppen enthält, und mindestens einem Polyisocyanat. Eingesetzt werden können Polyetherpolyole und Polyesterpolyole, die unter E. genauer beschrieben werden. Ebenfalls geeignet sind aminterminierte Polyether. Diese werden z.B. durch Reaktion eines hydroxylterminierten Polyethers mit Ammoniak oder einem sekundären Amin und Wasserstoff dargestellt. Diese Reaktion ist z.B. im U.S. Patent 3 654 376 beschrieben. Das isocyanatreaktive Material wird mit einem stöchiometrischen Überschuß eines Polyisocyanats umgesetzt. Wenn reaktive Ausgangsstoffe eingesetzt werden, läuft die Reaktion nach einfachem Mischen der Komponenten bei Raumtemperatur oder leicht erhöhten Temperaturen ab. Bei weniger reaktiven Ausgangsverbindungen wird bei höherer Temperatur und in Gegenwart eines Katalysators gearbeitet. Geeignete Katalysatoren sind beispielsweise tertiäre Amine wie Dimethylbenzylamin, N,N,N′,N′-Tetramethyldiaminoethylether, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethyl-hexanoat und vorzugsweise Zinn(II)-salze und Dibutylzinndilaurat sowie Mischungen aus tertiären Aminen und organischen Zinnsalzen.

Neben den bevorzugten Polyisocyanaten können auch monofunktionelle Isocyanate eingesetzt werden, z.B. Phenylisocyanat, Benzolsulfonyl isocyanat, Butylisocyanat, Chlorcarbonylisocyanat, Chlorphenylisocyanat, Cyclohexylisocyanat, 3,4-Dichlorphenylisocyanat, Naphthylisocyanat, Toluol-4-sulfonylisocyanat, Trichloracetylisocyanat, Trifluormethylphenylisocyanat.

Um die Geschwindigkeit der Eindickung zu regulieren, können auch blockierte Isocyanate eingesetzt werden. Solche blockierten Isocyanate sind z.B. beschrieben in Z.W.Wicke, Progress in Organic Coatings, 9 (1981) 3-28.

C.'''Als Polymerisationsinitiatoren werden übliche, bei Temperaturen oberhalb von 50 °C in Radikale zerfallende Peroxide eingesetzt. Ihre Halbwertszeit bei 50 °C soll vorzugsweise größer als 100 h sein. In Frage kommen Diacylperoxide, Peroxydicarbonate, Peroxyester, Perketale, Ketonperoxide, Hydroperoxide und Dialkylperoxide. Beispielhaft seien genannt: Succinylperoxid, Diacetylperoxid, Benzoylperoxid, t-Butylperoktoat, p-Chlorbenzoylperoxid, t-Butylperisobutyrat, 3,5,5-Trimethylcyclohexanonperketal, 2,5-Dimethylhexan-2,5-diperbenzoat, t-Butylperacetat, t-Butylperisononanat, Di-t-butyl-diperphthalat, 2,2-Bis-(t-butylperoxy)-butan, t-Butylperbenzoat, Dicumylperoxid, 2,5-Dimethyl-2,5-bis-(t-butylperoxy)-hexan, t-Butylhydroperoxid, Cumolhydroperoxid, Di-t-butylperoxid, 2,5-Dimethyl-2,5-bis-(t-butylperoxy)-hexin, 1,1,4,4,7,7-Hexamethylcyclo-4,7-diperoxynonan, Diamylperoxid, t-Butylperethylhexanoat, Di-lauroylperoxid, t-Butylcumylperoxid, $\gamma$-t-Butylperoxyvalerolacton, Dimyristylperoxydicarbonat, Bis(4-t-butylcyclohexyl)-peroxydicarbonat. Auch CC-labile Verbindungen und Azoverbindungen sind geeignet. Nicht geeignet sind Initiatoren, die unterhalb von 50°C zerfallen. Sie verringern die Lagerstabilität und führen zu vorzeitiger Gelierung der Formmasse. Ein Beispiel für einen derartigen Initiator ist Acetylacetonperoxid. Die sogenannten kalthärtenden Systeme haben ebenfalls eine zu geringe Lagerstabilität.

D. Zusatzstoffe

Als Zusatzstoffe kommen insbesondere in Frage:

1. Verstärkungsfasern
2. Füllstoffe
3. Inhibitoren
4. Polyfunktionelle Hydroxylverbindungen
5. Gleitmittel, wie z.B. Wachse
6. Paraffine zur Verminderung der Oberflächenverdunstung
7. Flammschutzmittel, insbesondere Halogenverbindungen.
8. Konventionelle Eindickmittel, wie Oxide oder Hydroxide des Lithiums, Magnesiums, Calciums, Aluminiums oder Titans
9. Eindickungsbeschleuniger, z.B. Ammoniumchloride, Phosphoniumchloride, Sulfoniumhalogenide, Wasser, Polyole oder Propandiol-1,2.
10. Härtungsbeschleuniger, z.B. Metallkomplexe oder aromatische Amine.

D 1 Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern mit einer Länge von bis zu 5 cm oder als gemahlene Fasern vorliegen, bevorzugt aber als Langfasern in Form von Einzelrovings, Bahnen aus parallelen Rovings, Fasermatten, Faservliese, Fasergewebe oder Fasergewirke.

Die Fasern werden in Mengen von 0 bis 400 Gew.%, vorzugsweise von 30 bis 350 Gew.%, bezogen auf A, eingesetzt. Bei Glasfasermatten beträgt der besonders bevorzugte Glasgehalt 100 bis 300 Gew.%, bezogen auf A, bei Rovings 30 bis 150 Gew.% und bei unidirektionalen Fasergelegen 150 bis 350 Gew.%.

D 2 Geeignete Füllstoffe sind z.B. übliche feinpulvrige oder körnige Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Ihr Gehalt beträgt vorzugsweise 5 bis 300 Gew.%, bezogen auf A.

D 3 Als Inhibitoren kommen phenolische Verbindungen, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin sowie deren Gemisch in Frage. Als zusätzliche Stabilisatoren eignen sich auch Salze des zweiwertigen Kupfers, beispielsweise Kupfernaphthenat oder -oktoat und quarternäre Ammoniumsalze. Sie werden in Mengen von 0,001 bis 0,1 Gew.%, bezogen auf A, eingesetzt.

D 4 Polyfunktionelle Hydroxylverbindungen

Die Formmasse kann relativ kurzkettige polyfunktionelle Hydroxylverbindungen enthalten. Beispielhaft seien genannt: Ethylenglykol, Propylenglykol, Diethylenglykol, Dipropylenglykol, Triethylenglykol, Tripropylenglykol, 1,4-Butandiol, Trimethylolpropan, Bisphenole, Hydrochinon, Brenzkatechin, Resorcin, Tetraethylenglykol, Glycerin, niedermolekulare Ethylenoxid- und/oder Propylenoxidderivate, vorzugsweise in Mengen von 0,1 bis 15 Gew.%, bezogen auf A.

Die erfindungsgemäßen Formmassen sind eingedickte, klebfreie, unvernetzte, lagerstabile Massen, die in flächiger, teigiger oder granulierter Form vorliegen können. Ihre Viskosität mit 150 Teilen Calciumcarbonat (®Millicarb) auf 100 Teile A+B bei 23°C soll mindestens 500.000 mPa.s, vorzugsweise mindestens 1.000.000 mPa.s, betragen, gemessen mit einem Brookfield-Viskosimeter.

Bei geringerer Viskosität können die Massen nicht mehr als klebfrei bezeichnet werden, man bekommt dann Schwierigkeiten bei der Verarbeitung. Bevorzugt soll die Viskosität zwischen $2 \cdot 10^6$ und $200 \cdot 10^6$ mPa.s liegen. Oberhalb von $200 \cdot 10^6$ mPa.s sind die Massen schon fest und hart, auch hier bekommt man Schwierigkeiten mit der Verarbeitung. Solche festen Massen können grundsätzlich durch Erhöhung der Temperatur verarbeitet weden, wobei aber dann die Gefahr vorzeitiger Vernetzung auftritt.

Unvernetzt bedeutet, daß kein dreidimensionales Molekülnetzwerk mit Atombindungen vorliegen darf. Praktisch kann die Vernetzung dadurch festgestellt werden, daß man versucht, die Masse in geeigneten

organischen Lösungsmitteln, vorzugsweise in Dimethylformamid, Dimethylsulfoxid oder Aceton gegebenenfalls unter Erwärmen, zu lösen. Dabei dürfen höchstens 10 Gew.%, vorzugsweise weniger als 1 Gew.% der Masse, mit Ausnahme natürlich der Verstärkungsfasern und Füllstoffe, als unlöslicher Rückstand verbleiben.

Lagerstabil bedeutet, daß die Formmasse bei mindestens eintägiger Lagerung bei Raumtemperatur noch unvernetzt, d.h. löslich nach obiger Definition sein muß. Vorzugsweise sind die erfindungsgemäßen Formmassen länger lagerfähig, beispielsweise mehr als 30 Tage.

Ein bevorzugtes Verfahren zur Herstellung der erfindungsgemäßen Formmassen besteht darin, daß man die Komponenten A, B 1, C und D (mit Ausnahme von langen Verstärkungsfasern) vermischt, bei Temperaturen unterhalb von 50 °C die Komponente B 2 zusetzt und dadurch die Eindickung einleitet, gegebenenfalls die noch fließfähige Masse auf Verstärkungsfasern aufbringt und dann die Eindickung zu Ende führt. Bei einem anderen bevorzugten Verfahren vermischt man zunächst die Komponenten A, B2, C und D, setzt dann bei Temperaturen unterhalb von 50 °C die Komponente B1 zu und leitet dadurch die Eindickung ein. Zur Beschleunigung der Eindickung kann es in manchen Fällen zweckmäßig sein, die Masse kurzzeitig auf Temperaturen unterhalb von 100 °C, vorzugsweise unterhalb von 50 °C zu erwärmen. Bis zur vollständigen Eindickung der Masse können mehrere Tage verstreichen, vorzugsweise ist sie aber in weniger als einer Stunde praktisch beendet. Die eingedickten Massen können längere Zeit bis zur Verarbeitung gelagert werden, wobei sie z.B. aufgewickelt gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50 °C, vorzugsweise zwischen 80 und 200 °C und insbesondere zwischen 120 und 180 °C durchgeführt wird.

Die in den Beispielen genannten Teile und Prozente beziehen sich auf das Gewicht.

## Beispiele

### Herstellung von UP-Harzen

1. Ein ungesättigter Polyester mit Säurezahl 0,7 und Hydroxylzahl 135 wurde durch zweistufige Kondensation aus Isophthalsäure, Ethylenglykol und Neopentylglykol (1. Stufe) sowie Maleinsäureanhydrid (2. Stufe) im Molverhältnis 0,5 : 0,98 : 0,98 : 1 hergestellt. Er wurde 64%ig in Styrol gelöst und mit 130 ppm Hydrochinon stabilisiert.

2. Ein ungesättigter Polyester wurde hergestellt aus Maleinsäureanhydrid und Propandiol-1,2 im Molverhältnis 1 : 1,35 und 65%ig in Styrol gelöst. Diese Lösung mit einer Säurezahl von 2,3 wurde mit 185 ppm Hydrochinon stabilisiert.

3. Ein ungesättigter Polyester mit Säurezahl 50 und Hydroxylzahl 60 wurde hergestellt aus Maleinsäureanhydrid, o-Phthalsäure und Propandiol-1,2 im Molverhältnis 1 : 0,5 : 1,5 und 65%ig in Styrol gelöst. Diese Lösung wurde mit 100 ppm Hydrochinon stabilisiert.

4. 784 Teile Maleinsäureanhdyrid, 347 Teile Ethylenglykol und 426 Teile Propandiol-1,2 werden unter Rühren und Darüberleiten von Stickstoff innerhalb von 2 Stunden auf 190 °C erhitzt. Die Kondensation wird bei dieser Temperatur fortgesetzt, bis Säurezahl 27 erreicht ist. 1300 Teile des so erhaltenen ungesättigten Polyesters werden nach Zugabe von 0,184 Teilen Toluhydrochinon in 557 Teilen Diallylphthalat gelöst. Die Viskosität des Harzes bei 23 °C beträgt 6750 mPa.s.

5. 223 Teile Isophthalsäure, 110 Teile Propandiol-1,2 und 212 Teile Diethylenglykol werden unter Rühren und Darüberleiten von Stickstoff innerhalb von 4 Stunden auf 190 °C erhitzt. Bei dieser Temperatur wird die Veresterung bis Säurezahl 10 fortgesetzt. 196 Teile Maleinsäureanhydrid werden hinzugefügt und es wird bis Säurezahl 35 kondensiert. 650 Teile des so erhaltenen ungesättigten Polyesters werden nach Zugabe von 0,1 Teilen Hydrochinon bei 120 °C in 350 Teilen Styrol gelöst.

### Herstellung von Vinylesterharzen

1. 380 Teile eines Bisphenol A-diglycidylethers (Epikote 828, Fa. Shell) und 172 Teile Methacrylsäure werden bei 100 °C in Gegenwart von 0,5 Teilen Tetramethylammoniumchlorid als Katalysator und 0,1 Teilen Hydrochinon als Inhibitor bis zu einem Umsatz von 95% der Epoxidgruppen (bestimmt durch Titration mit HBr) reagiert. Die Schmelze wird anschließend in 368 Teilen Styrol (40%) gelöst.

2. 95 Teile eines Bisphenol A-diglycidylethers mit einem Epoxidäquivalentgewicht (EEW) von 188 und 490 Teile eines Bisphenol A-diglycidylethers mit EEW 490 werden bei 100 °C in Gegenwart von 0,5 Teilen Tetramethylammoniumchlorid als Katalysator und 0,1 Teilen Hydrochinon als Inhibitor mit 129 Teilen Methacrylsäure bis zu einem Umsatz von 95% der Epoxidgruppen verestert. Die Schmelze wird heiß in 476 Teilen Styrol (40%) gelöst.

Erfindungsgemäße aromatische Amine

1.

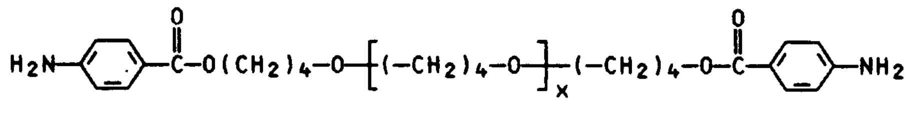

Zur Herstellung dieses aminterminierten Polyethers werden 1100 g Polytetrahydrofuran (Molgewicht 1000, Hydroxylzahl 111), 363 g p-Aminobenzoesäureethylester und 141 mg Titantetrabutylat bei 190 bis 200 ° C unter Stickstoff im Glaskolben gerührt, bis kein Ethanol mehr destilliert. Die Aminzahl beträgt 88.

2.

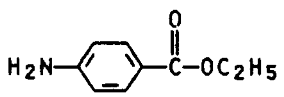

p-Aminobenzoesäureethylester

3.

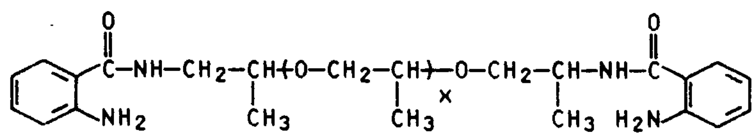

115 Teile Etherdiamin D 230 (Molmasse 230 g/mol) werden in 200 Teilen 1-Methoxy-2-propanol gelöst. Bei 40 bis 50 ° C werden portionsweise 163 Teile Isatosäureanhydrid zugegeben. Es setzt eine lebhafte $CO_2$-Entwicklung ein. Nach Beendigung der Gasentwicklung werden 2 Teile 50%ige Natronlauge zugesetzt und 0,5 h auf 60 bis 70 ° C aufgeheizt. Nach dem Abkühlen wird zweimal mit Wasser gewaschen, über $MgSO_4$ getrocknet und am Rotationsverdampfer vom Lösungsmittel befreit. Die Aminzahl beträgt 197.

4.

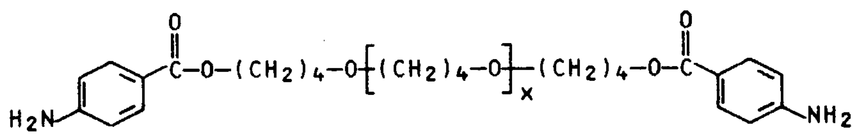

975 Teile Polytetrahydrofuran (Molekulargewicht 650), 495 Teile p-Aminobenzoesäureethylester und 0,67 Teile Titantetrabutylat werden unter Rühren und Darüberleiten von Stickstoff innerhalb von 30 Minuten auf 190 ° C erhitzt und 14 Stunden bei dieser Temperatur gehalten, 1340 Teile einer braunen Flüssigkeit werden erhalten.

5.

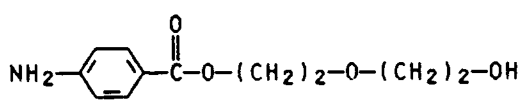

424 Teile Diethylenglykol, 660 Teile p-Aminobenzoesäureethylester und 0,45 Teile Titantetrabutylat werden innerhalb von 30 Minuten auf 190 ° C erhitzt und 17 Stunden bei dieser Temperatur gehalten. 890 g einer hellgelben, teilkristallinen Substanz werden erhalten.

6.

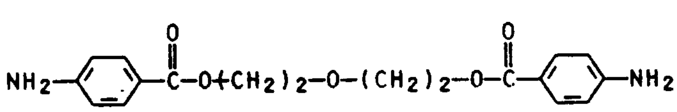

212 Teile Diethylenglykol, 660 Teile p-Aminobenzoesäureethylester und 0,35 Teile Titantetrabutylat werden innerhalb von 30 Minuten auf 190 ° C erhitzt und 19 Stunden bei dieser Temperatur gehalten. 680 g

eines hellbraunen Feststoffs werden erhalten.

7.

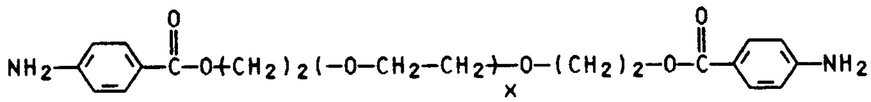

900 Teile Polyethylenglykol (Pluriol E 600, Fa. BASF, Molekulargewicht 600), 495,6 Teile p-Aminobenzoesäureethylester und 0,25 Teile Titantetrabutylat werden unter Rühren und strömendem Stickstoff innerhalb von 3 Stunden auf 195 ° C erwärmt, 9,5 Stunden bei dieser Temperatur gehalten und anschließend 14,5 Stunden bei 200 ° C kondensiert. Man erhält eine braune Flüssigkeit mit einer Aminzahl von 122 und einer Viskosität (23 ° C) von 10.500 mPa.s.

8.

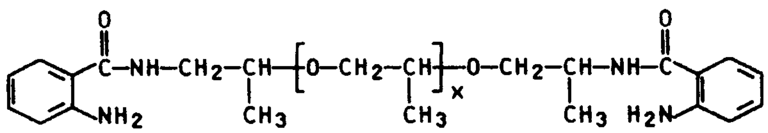

200 Teile Etherdiamin D 2000 (Molmasse 2000 g/mol) werden bei Raumtemperatur mit 163 Teilen Isatosäureanhydrid portionsweise versetzt. Unter lebhafter $CO_2$-Entwicklung steigt die Innentemperatur auf 45 ° C. Man läßt bei dieser Temperatur noch 2 Stunden nachreagieren, gibt 2 Teile 50%ige NaOH hinzu und erwärmt 0,5 Stunden auf 60 ° C. Nach dem Abkühlen wird das Produkt in Methylenchlorid aufgenommen, mit Wasser gewaschen, über $MgSO_4$ getrocknet und am Rotationsverdampfer vom Lösungsmittel befreit. Die Aminzahl beträgt 43,6.

Nicht erfindungsgemäße Amine:

9.

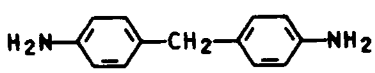

4,4'-Diaminodiphenylmethan

10.

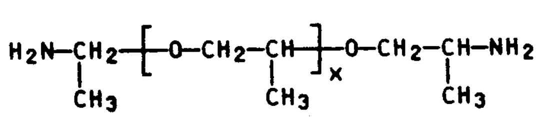

(nach EP-A 28 470)

Molekulargewicht 230

11.

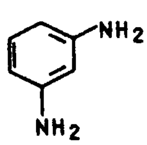

m-Phenylendiamin

12.

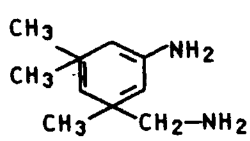

Isophorondiamin
(nach DE-A 27 15 294)

Isocyanate

Isocyanat 1 ist reines 4,4'-Diphenylmethandiisocyanat mit einem NCO-Gehalt von 33,6%.

Isocyanat 2 ist rohes 4,4'-Diphenylmethandiisocyanat mit einem NCO-Gehalt von 31,0% und einer Viskosität von 200 bis 220 mPa.s bei 25 ° C.

Isocyanat 3 ist ein Isocyanat-Präpolymer auf Basis eines Polyetherpolyols mit Molekulargewicht 450 und Hydroxylzahl 250 sowie auf Basis Dipropylenglykol mit einem NCO-Gehalt von 23,0% und einer Viskosität von 700 mPa.s bei 25 ° C.

Beispiel 1

Eindickversuch von UP-Harz 1 ohne Füllstoff

| | |
|---|---|
| 70,0 Teile UP-Harz 1 | (175,00 g) |
| 20,0 Teile Amin 1 | ( 50,00 g) |
| 10,0 Teile Styrol | ( 25,00 g) |
| 11,8 Teile Isocyanat 1 | ( 29,46 g) |

Die Komponenten wurden miteinander vermischt und bei Raumtemperatur luftdicht verschlossen gelagert. Nach 45 min war die Mischung steif, nach 24 Stunden betrug die Viskosität 32,8 • $10^6$ mPa.s (23 ° C).

Vergleichsversuch

| | |
|---|---|
| 200,0 Teile | UP-Harz 1 |
| 23,8 Teile | Isocyanat 1 |

Die Komponenten wurden vermischt und bei Raumtemperatur verschlossen gelagert. Die Viskosität stieg nur sehr langsam an, nach 3 Tagen war die Mischung noch fließfähig.

Visk.$_{23°C}$: 1.4 • $10^6$ (mPa.s) nach 4 Tagen

Visk.$_{23°C}$: 1.77 • $10^6$ (mPa.s) nach 10 Tagen

Im Beispiel 1 und im Vergleichsbeispiel war die Isocyanatmenge so bemessen, daß jeweils 70% der Endgruppensumme aus OH- und $NH_2$-Gruppenreagieren konnte.

Beispiele 2 bis 13

Verschiedene UP-Harze wurden in Gegenwart der Füllstoffe Kreide (®Millicarb) und Zeolith (®Baylith L) eingedickt. Die Beispiele 9-13 sind nicht erfindungsgemäß. Die UP-Harze 1 und 2 lassen sich mit Erdalkalioxiden nicht eindicken.

Tabelle 1

| Beispiel | 2 | 3 | 4 | 5 | 6 | 7 |
|---|---|---|---|---|---|---|
| UP-Harz (Teile) | 1/70 | 1/70 | 1/85 | 2/70 | 3/70 | 1/81 |
| Amin (Teile) | 1/20 | 1/20 | 2/5,2 | 1/20 | 1/20 | 3/9 |
| Styrol (Teile) | 10 | 10 | 10 | 15 | 15 | 10 |
| Isocyanat 1 (Teile) | 2,49 | 8,27 | 13,5 | 4,97 | 4,97 | 5,6 |
| Äquivalente-$NH_2$/bezogen auf 100g A+B1 | 0,031 | 0,031 | 0,031 | 0,031 | 0,031 | 0,031 |
| Äquivalente-NCO/bezogen auf 100 T. A+B1 | 0,02 | 0,066 | 0,11 | 0,04 | 0,04 | 0,045 |
| Kreide (Teile) | 150 | 150 | 150 | 150 | 150 | 150 |
| Zeolith (Teile) | 5 | 5 | 5 | 5 | 5 | 5 |
| Eindickverhalten: | | | | | | |
| klebfrei nach min | 180 | 180 | 360 | 40 | 10 | |
| Viskosität bei 23°C ($10^6$mPa.s nach 48 h) | 44,8 | 38,0 | 7,84 | 49,6 | 108,8 | 13,6 (nach 21 h) |

Tabelle 1 (Fortsetzung)

| Beispiel | 8 | 9 | 10 | 11 | 12 | 13 |
|---|---|---|---|---|---|---|
| UP-Harz (Teile) | 1/90 | 1/90 | 1/86 | 1/90 | 1/90 | 1/90 |
| Amin (Teile) | 6/4,86 | 9/3,1 | 10/3,6 | 11/1,7 | 12/2,6 | 12/2,6 |
| Styrol (Teile) | 10 | 10 | 10 | 10 | 10 | 10 |
| Isocyanat 1 (Teile) | 8,75 | 14,1 | 8,3 | 9,04 | 9,04 | 3,9[x] |
| Äquivalente-$NH_2$/bezogen auf 100g A+B1 | 0,028 | 0,031 | 0,031 | 0,031 | 0,031 | 0,031 |
| Äquivalente-NCO/bezogen auf 100 T. A+B1 | 0,070 | 0,11 | 0,066 | 0,072 | 0,072 | 0,031 |
| Kreide (Teile) | 150 | 150 | 150 | 150 | 150 | 150 |
| Zeolith (Teile) | 5 | 5 | 5 | 5 | 5 | 5 |
| Eindickverhalten: klebfrei nach min | 30 | 0,2 | nach 9 Tagen klebrig | <1 | >60 | 40 |
| Viskosität bei 23°C ($10^6$mPa.s nach 48 h) | 23,2 (nach 24h) | - trocken steif | 0,07 noch fließfähig | - steif | - vernetzt in DMF unlösl. | - vernetzt in DMF unlösl. |

[x] Das Isocyanat wurde erst 24 Stunden nach Vermischen der übrigen Komponenten zugesetzt

Beispiel 14

Herstellung einer SMC-Masse

Eine Harz-Füllstoffmischung wurde aus folgenden Komponenten mit einem schnell laufenden Rührwerk hergestellt:

85,0 Teile UP-Harz 1
15,0 Teile Diamin 1

5,5 Teile Zeolith-Pulver (Baylith L)
5,0 Teile Zinkstearat
165,0 Teile Füllstoff Kreide (Millicarb)
1,5 Teile tert.-Butylperbenzoat

Zu dieser Mischung wurde ebenfalls unter Rühren eine Lösung von 5,5 Teilen 4,4'-Diphenylmethandiisocyanat (1) in 5 Teilen Styrol zugesetzt, ca. 4 Minuten im Wasserstrahlvakuum entlüftet und zwei Glasfasermatten (40 • 40 cm, Endlosfasern styrollöslich gebunden) zwischen Polyesterfolien getränkt. Nach 24-stündiger Lagerung bei 23 °C war ein klebfreies, lederartiges Halbzeug entstanden, das in einem polierten Stahlwerkzeug bei 140 °C in 12 Minuten unter einem Druck von 200 bar zu einer Platte (4 • 120 • 120 mm) verpreßt wurde. Das Formteil zeigte eine glänzende Oberfläche. Der Glasfasergehalt betrug 9%.

Beispiel 15

Es wurde eine Mischung aus folgenden Komponenten hergestellt:

175,0 Teile UP-Harz 1
50,0 Teile Diamin 1
25,0 Teile Styrol
29,5 Teile Isocyanat 1, gelöst in 25 Teilen Styrol
4,5 Teile Benzoylperoxid (50%ig)
1,5 Teile tert.-Butylperbenzoat

Diese Mischung wurde in eine kalte Metallplattenform (4 • 200 • 200 mm) gegossen und 21 Stunden gelagert, wobei die Viskosität (23 °C) auf 6,56 • $10^6$ mPa.s anstieg. Zur Härtung stellte man die Form bei 120 °C in einen Wärmeschrank (2,5 Stunden) und erhielt nach Abkühlen und Entformen eine harte, transparente Platte, die im Schlag-Biegeversuch (DIN 53453) eine Schlagzähigkeit von 21 kJ/$m^2$ ergab.

Beispiele 16 bis 19

Die Eindickung von Monomeren und Harzlösungen ohne Füllstoff wurden untersucht. Die Ergebnisse sind in Tabelle 2 zusammengefaßt.

Tabelle 2

| Komponenete (Teile) | Beispiel 16 | Beispiel 17 | Beispiel 18 | Beispiel 19 |
|---|---|---|---|---|
| Amin 1 | 20 | 20 | 20 | -- |
| Amin 4 | -- | -- | -- | 21 |
| Epikote 828 | -- | 56 | -- | -- |
| Diallylphthalat | 80 | -- | -- | 79 |
| Styrol | -- | 24 | -- | -- |
| Methylmethacrylat | -- | -- | 80 | -- |
| Isocyanat 1 | 3,92 | 3,92 | 3,92 | -- |
| Isocyanat 2 | -- | -- | -- | 6,38 |
| Konsistenz nach 7 d | fest, hart trüb, lösl. in DMF | fest, hart trüb, lösl. in DMF | fest, zäh trüb | sehr hart leicht trüb |

Beispiele 20 bis 24

Die Eindickungen von UP-Harzlösungen und Hochpolymerlösungen mit Füllstoff wurden untersucht. Die Ergebnisse sind in Tabelle 3 zusammengefaßt.

Tabelle 3

| Komponenten (Teile) | Beispiel 20 | Beispiel 21 | Beispiel 22 | Beispiel 23 | Beispiel 24 |
|---|---|---|---|---|---|
| UP-Harz 4 | 62 | 47 | 47 | -- | -- |
| UP-Harz 5 | -- | -- | -- | 70 | -- |
| Amin 1 | -- | -- | -- | 20 | 20 |
| Amin 4 | 10,5 | 21 | 21 | -- | -- |
| Polyvinylacetat | -- | -- | -- | -- | 24,5 |
| Diallylphthalat | 28,5 | 33 | 33 | -- | -- |
| Styrol | -- | -- | -- | 10 | 55,5 |
| Isocyanat 1 | 2,8 | 5,9 | -- | -- | 3,9 |
| Isocyanat 3 | -- | -- | 5,9 | 3,9 | -- |
| Millicarb | 150 | 150 | 150 | 150 | 150 |
| Visk.(23 °C) • $10^6$ mPa.s | | | | | |
| 1 Stunde | 36 | 176 | 76 | 84 | 100 |
| 24 Stunden | 68 | 384 | 112 | 140 | 204 |

Beispiele 25 und 26

Eindickung von Vinylesterharzen

Tabelle 4

| Komponenten (Teile) | Beispiel 25 | Beispiel 28 |
|---|---|---|
| VE-Harz 1 | 100 | -- |
| VE-Harz 2 | -- | 100 |
| Amin 4 | 25 | 25 |
| Isocyanat 1 | 32 | 6 |
| Styrol | 32 | 6 |
| Visk. 23 °C (mPa.s) | | |
| nach 24 Stunden | 1,2• $10^6$ | 10.$10^6$ |
| nach 48 Stunden | trocken, | trocken steif |

Beispiel 27

Eine Harz-Füllstoffmischung wurde aus folgenden Komponenten mit einem schnell laufenden Rührwerk hergestellt.

| | |
|---|---|
| 100,0 Teile | VE-Harz 2 |
| 15,0 Teile | Amin 4 |
| 6,1 Teile | Zeolith-Pulver (Baylith L, Fa. Bayer) |
| 5,5 Teile | Zinkstearat |
| 184,0 Teile | Füllstoff Kreide (Millicarb) |
| 2,5 Teile | tert.-Butylperbenzoat |

Zu dieser Mischung wurde unter Rühren eine Lösung aus 22 Teilen Isocyanat 1 in 22 Teilen Styrol gegeben. Mit der so hergestellten Mischung wurde eine Glasfasermatte (40•40 cm, Endlosfasern styrollöslich gebunden) zwischen zwei Polyesterfolien getränkt. Nach 24-stündiger Lagerzeit bei 23 °C war ein klebfreies, lederartiges Halbzeug entstanden, das in einem polierten Stahlwerkzeug bei 140 °C in 10 Minuten unter einem Druck von 200 bar zu einer Platte (4•120•120 mm) verpreßt wurde.

Beispiel 28

| | |
|---|---|
| 70 Teile | UP-Harz 1 |
| 10 Teile | Styrol |
| 5 Teile | Füllstoff Zeolith |
| 150 Teile | Füllstoff Kreide |

wurden unter Rühren homogenisiert, dann 5,8 Teile Isocyanat 1 eingerührt. Nach 10 min wurden 10 Teile Amin 1 zugesetzt.

Nach 24 Stunden wurde eine Viskosität (bei 23°C) von $43 \cdot 10^6$ [mPa•s] gemessen. Das Harz der eingedickten Probe war in DMF noch löslich.

## Patentansprüche

1. Eingedickte, unvernetzte Formmasse, die bei 23°C lagerstabil und bei Temperaturen oberhalb von 50°C härtbar ist, enthaltend

   A ein radikalisch polymerisierbares Monomer A 1 oder eine Mischung aus mindestens 5 Gew.-% eines radikalisch polymerisierbaren Monomeren A 1 und höchstens 95 Gew.-% eines gesättigten oder ungesättigten, in A 1 gelösten oder dispergierten Oligomeren oder Polymeren A 2,

   B 1 bis 80 Gew.-%, bezogen auf A, eines Isocyanatgruppen enthaltenden Eindickmittels,

   C 0,01 bis 5 Gew.-%, bezogen auf A, eines bei Temperaturen oberhalb von 50°C in Radikale zerfallenden Polymerisationsinitiators, sowie gegebenenfalls

   D übliche Zusatzstoffe,

   dadurch gekennzeichnet, daß das Eindickmittel eine Kombination ist von

   B1 0,001 bis 0,5 Amin-Äquivalenten, bezogen auf 100 g A + B1, eines Aminobenzoesäure-Derivats der allgemeinen Formel (I)

   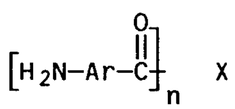 (I),

   wobei die Symbole folgende Bedeutung haben:

   Ar ist ein zweiwertiger aromatischer Rest, der gegebenenfalls substituiert sein kann;

   n bedeutet 1 oder 2;

   X kann $-O-R^1$, $-NH-R^1$, $-N(R^1)_2$, -O-R-O-, -NH-R-NH-, -NH-R-O-,

   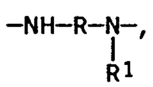, 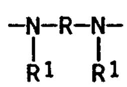 oder 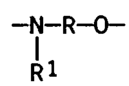

   sein

   R ist eine Alkylen-, Arylen-, Polyether-, Polyester-, Polyamid-oder Polycarbonat-Gruppierung;

   $R^1$ ist ein Alkyl- oder Arylrest, und

   B2 0,001 bis 1,5 Isocyanat-Äquivalenten, bezogen auf ein Äquivalent aller in der Formmasse enthaltenen NCO-reaktiven Gruppen, eines Isocyanats.

2. Eingedickte Formmasse nach Anspruch 1, dadurch gekennzeichnet, daß X = -O-R-O oder -NH-R-NH- ist, und R eine Polyethergruppierung mit einem Polymerisationsgrad zwischen 1 und 300 oder eine Alkylengruppierung mit 2 bis 20 Kohlenstoffatomen ist.

3. Eingedickte Formmasse nach Anspruch 1, dadurch gekennzeichnet, daß die Komponente A 2 ein ungesättigter Polyester, ein Vinylester, ein Vinylesterurethan, ein allyliertes Präpolymer, ein Bismaleinimid-Harz oder ein Kohlenwasserstoffharz ist.

4. Eingedickte Formmasse nach Anspruch 1, dadurch gekennzeichnet, daß die Komponente A 2 ein gesättigter Polyester, ein Polyesterpolyol, ein Polyetherpolyol, ein Epoxidharz, ein Thermoplast oder

ein Elastomer ist.

**5.** Eingedickte Formmasse nach Anspruch 1, dadurch gekennzeichnet, daß sie als Zusatzstoff D 1 10 bis 400 Gew.%, bezogen auf A, faserförmiger Verstärkungsmaterialien enthält.

**6.** Eingedickte Formmasse nach Anspruch 1, dadurch gekennzeichnet, daß sie als Zusatzstoff D 2 5 bis 300 Gew.%, bezogen auf A, pulverförmige oder körnige Füllstoffe enthält.

**7.** Eingedickte Formmasse nach Anspruch 1, dadurch gekennzeichnet, daß sie - mit 150 Teilen Calciumcarbonat als Füllstof D auf 100 Teile A+B gemessen - eine Viskosität bei 23°C von mindestens 500.000 mPa.s hat.

**8.** Eingedickte unvernetzte Formmasse nach Anspruch 1, dadurch gekennzeichnet, daß sie - ohne Füllstoffe und Verstärkungsfasern bestimmt - in geeigneten organischen Lösungsmitteln, z.B. Dimethylformamid, löslich ist.

**9.** Eingedickte, unvernetzte, lagerstabile Formmasse nach Anspruch 1, dadurch gekennzeichnet, daß sie nach mindestens eintägiger Lagerung bei 23°C noch in geeigneten organischen Lösungsmitteln, z.B. Dimethylformamid, praktisch vollständig löslich ist.

**10.** Verfahren zur Herstellung der Formmasse nach Anspruch 1, dadurch gekennzeichnet, daß man die Komponenten A, B 1, C und D vermischt, bei Temperaturen unterhalb von 50°C die Komponente B 2 zusetzt und dadurch die Eindickung einleitet, gegebenenfalls die noch fließfähige Masse auf Verstärkungsfasern aufbringt, und dann die Eindickung, gegebenenfalls durch Erwärmen, zu Ende führt.

**11.** Verfahren zur Herstellung der Formmasse nach Anspruch 1, dadurch gekennzeichnet, daß man die Komponente A, B 2, C und D vermischt, bei Temperaturen unterhalb von 50°C die Komponente B 1 zusetzt und dadurch die Eindickung einleitet, gegebenenfalls die noch fließfähige Masse auf Verstärkungsfasern aufbringt, und dann die Eindickung, gegebenenfalls durch Erwärmen, zu Ende führt.

**12.** Verwendung der Formmasse nach Anspruch 1 zur Herstellung von Formteilen durch Pressen, Spritzpressen, Spritzgießen oder Tiefziehen und anschließendes Aushärten bei Temperaturen oberhalb von 50°C, vorzugsweise zwischen 80 und 200°C.

## Claims

**1.** A thickened, uncrosslinked molding composition which has a long shelf life at 23°C and can be cured at above 50°C and contains

A a monomer A1 which can be polymerized by means of free radicals,
or a mixture of
at least 5% by weight of a monomer A1 which can be polymerized by means of free radicals and
at most 95% by weight of a saturated or unsaturated oligomer or polymer A2 dissolved or dispersed in A1,
B 1 to 80% by weight, based on A, of an isocyanate-containing thickener,
C 0.01 to 5% by weight, based on A, of a polymerization initiator which decomposes to give free radicals at above 50°C, and, if desired,
D customary additives,

wherein the thickener is a combination of

B1 0.001 to 0.5 amine equivalent, based on 100 g of A+B1, of an aminobenzoic acid derivative of the formula (I)

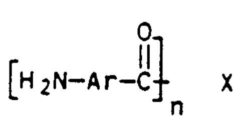

(I)

where the symbols have the following meaning:

Ar is a divalent, substituted or unsubstituted aromatic radical;

n is 1 or 2;

X can be $-O-R^1$, $-NH-R^1$, $-N(R^1)_2$, -O-R-O-, -NH-R-NH-, -NH-R-O-,

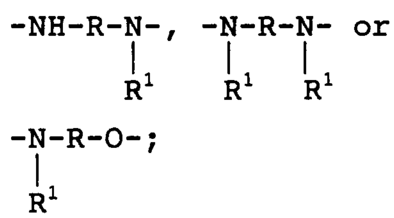

or

R is an alkylene, arylene, polyether, polyester, polyamide or polycarbonate group; and

$R^1$ is alkyl or aryl, and

B2 0.001 to 1.5 isocyanate equivalents, based on one equivalent of all the NCO- reactive groups present in the molding composition, of an isocyanate.

**2.** A thickened molding composition as claimed in claim 1, wherein X is -O-R-O- or -NH-R-NH-, and R is a polyether group having a degree of polymerization of from 1 to 300 or an alkylene group having 2 to 20 carbon atoms.

**3.** A thickened molding composition as claimed in claim 1, wherein component A2 is an unsaturated polyester, a vinyl ester, a vinyl ester urethane, an allylated prepolymer, a bismaleimide resin or a hydrocarbon resin.

**4.** A thickened molding composition as claimed in claim 1, wherein component A2 is a saturated polyester, a polyester polyol, a polyether polyol, an epoxy resin, a thermoplastic or an elastomer.

**5.** A thickened molding composition as claimed in claim 1, containing 10 to 400% by weight, based on A, of fiber-like reinforcing materials as the additive D1.

**6.** A thickened molding composition as claimed in claim 1, containing 5 to 300% by weight, based on A, of pulverulent or granular fillers as the additive D2.

**7.** A thickened molding composition as claimed in claim 1, which has a viscosity of not less than 500,000 mPa.s at 23°C, measured with 150 parts of calcium carbonate as a filler D per 100 parts of A+B.

**8.** A thickened, uncrosslinked molding composition as claimed in claim 1, which is soluble in suitable organic solvents, eg. dimethylformamide, determined without fillers and reinforcing fibers.

**9.** A thickened, uncrosslinked molding composition as claimed in claim 1 which has a long shelf life and is still virtually fully soluble in suitable organic solvents, eg. dimethylformamide, after storage for not less than one day at 23°C.

**10.** A process for the production of a molding composition as claimed in claim 1, which comprises mixing components A, B1, C and D, adding component B2 at less than 50°C and thereby initiating thickening, if desired applying the still free-flowing composition to reinforcing fibers, and then completing the thickening, if necessary by warming.

**11.** A process for the production of a molding composition as claimed in claim 1, which comprises mixing components A, B2, C and D, adding component B1 at less than 50°C and thereby initiating thickening, if desired applying the still free-flowing composition to reinforcing fibers, and then completing the thickening, if necessary by warming.

**12.** A method of using a molding composition as claimed in claim 1 for the production of moldings by compression molding, transfer molding, injection molding or thermoforming and subsequent curing at

above 50 ° C, preferably at from 80 to 200 ° C.

**Revendications**

1. Masse à mouler non réticulée épaissie, qui est stable au stockage à 23 ° C et peut être durcie à des températures supérieures à 50 ° C, contenant

   A un monomère A1 susceptible de polymérisation radicalaire
   ou un mélange
   d'au moins 5% en poids d'un monomère A1 susceptible de polymérisation radicalaire et
   de 95% en poids au maximum d'un oligomère ou polymère saturé ou insaturé A2, dissous ou dispersé dans A1,
   B de 1 à 80% en poids, par rapport à A, d'un épaississant contenant des groupements isocyanate,
   C de 0,01 à 5% en poids, par rapport à A, d'un initiateur de polymérisation se décomposant en radicaux à des températures supérieures à 50 ° C, et éventuellement
   D des additifs usuels

   caractérisée en ce que l'épaississant est une combinaison de

   B1 0,001 à 0,5 équivalents d'amine, par rapport à 100 g de A + B1, d'un dérivé d'acide aminobenzoïque de formule générale (I)

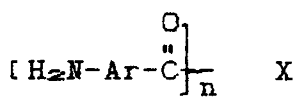

(I)

   dans laquelle les symboles ont les significations suivantes:

   Ar est un reste aromatique bivalent qui peut être éventuellement substitué;
   n est mis pour 1 ou 2;
   X peut être mis pour -O-$R^1$, -NH-$R^1$, -N($R^1$)$_2$,
   -O-R-O-, -NH-R-NH-, -NH-R-O-,

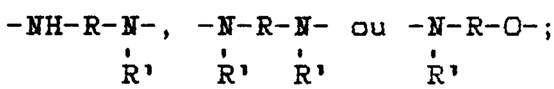

   R est un groupement alkylène, arylène, polyéther, polyester, polyamide ou polycarbonate;
   $R^1$ est un reste alkyle ou aryle, et de

   B2 0,001 à 1,5 équivalents d'isocyanate, par rapport à un équivalent de tous les groupements NCO-réactifs contenus dans la masse à mouler, d'un isocyanate.

2. Masse à mouler épaissie selon la revendication 1, caractérisée en ce que X = -O-R-O ou -NH-R-NH, et R est un groupement polyéther ayant un degré de polymérisation compris entre 1 et 300 ou un groupement alkylène à 2-20 atomes de carbone.

3. Masse à mouler épaissie selon la revendication 1, caractérisée en ce que le composant A2 est un polyester insaturé, un ester vinylique, un vinylesteruréthane, un prépolymère allylé, une résine de bismaléimide ou une résine hydrocarbonée.

4. Masse à mouler épaissie selon la revendication 1, caractérisée en ce que le composant A2 est un polyester saturé, un polyesterpolyol, un polyétherpolyol, une résine époxy, une matière thermoplastique ou un élastomère.

5. Masse à mouler épaissie selon la revendication 1, caractérisée en ce qu'elle contient, en tant qu'additif D1, de 10 à 400% en poids, par rapport à A, de matières de renforcement fibreuses.

6. Masse à mouler épaissie selon le revendication 1, caractérisée en ce qu'elle contient, en tant qu'additif D2, de 5 à 300% en poids, par rapport à A, de matières de charge en poudre ou en grains.

7. Masse à mouler épaissie selon la revendication 1, caractérisée en ce qu'elle a une viscosité à 23 ° C - mesurée avec 150 parties de carbonate de calcium en tant que matière de charge D pour 100 parties de A + B - d'au moins 500 000 mPa.s.

8. Masse à mouler non réticulée épaissie selon la revendication 1, caractérisée en ce que - sans matières de charge ni fibres de renforcement - elle est soluble dans des solvants organiques appropriés, par exemple dans du diméthylformamide.

9. Masse à mouler non réticulée, épaissie, stable au stockage selon la revendication 1, caractérisée en ce qu'après un stockage d'au moins un jour à 23 ° C, elle est encore soluble de façon pratiquement complète dans des solvants organiques appropriés, par exemple dans du diméthylformamide.

10. Procédé de préparation de la masse à mouler selon la revendication 1, caractérisé en ce qu'on mélange les composants A, B1, C et D, on ajoute le composant B2 à une température inférieure à 50 ° C et on amorce ainsi l'épaississement, on verse éventuellement la masse encore fluide sur des fibres de renforcement, puis on conduit à bonne fin l'épaississement, éventuellement par chauffage.

11. Procédé de préparation de la masse à mouler selon la revendication 1, caractérisé en ce qu'on mélange les composants A, B2, C et D, on ajoute le composant B1 à une température inférieure à 50 ° C et on amorce ainsi l'épaississement, on verse éventuellement la masse encore fluide sur des fibres de renforcement, puis on conduit à bonne fin l'épaississement, éventuellement par chauffage.

12. Utilisation de la masse à mouler selon la revendication 1 pour la fabrication de pièces moulées par pressage, moulage par transfert, moulage par injection ou emboutissage, suivi de durcissement à des températures supérieures à 50 ° C, comprises de préférence entre 80 et 200 ° C.